# EUROPEAN PATENT APPLICATION

(11) **EP 2 746 318 A1**
(43) Date of publication of application: **25.06.2014**
(21) Application number: 12197829.0
(22) Date of filing: 18.12.2012
(51) Int. Cl.: C08J 3/00

(54) **Process for preparing PLA stereocomplex**

(71) Applicant: TOTAL RESEARCH & TECHNOLOGY FELUY, 7181 Seneffe (BE)
(72) Inventor: Lhost, Olivier, 7021 Havré (BE); Navez, Pascal, 6140 Fontaine l'Evêque (BE)
(74) Representative: Bounaga, Sakina

(57) **Abstract**

The present invention relates to a process for preparing a PLLA/PDLA stereocomplex polymer, comprising the steps of:
a) polymerizing L,L-lactide to obtain PLLA;
b) polymerizing D,D-lactide to obtain PDLA;
c) mixing the PLLA obtained in step a) with the PDLA obtained in step b) in an extruder, in the presence of a supercritical fluid, thereby preparing a PLLA/PDLA stereocomplex polymer; and
d) optionally, removing the supercritical fluid from the PLLA/PDLA stereocomplex polymer obtained in step c).

## Description

### FIELD OF THE INVENTION

The invention relates to a process for preparing polylactic acid stereocomplex.

### BACKGROUND OF THE INVENTION

Polylactic acid (PLA) is a biopolymer combining the aptitude to be produced based on renewable raw materials and, at the end of its life, to be compostable. The lactic acid monomer contains a chiral carbon atom, so two enantiomers of the monomer exist, labeled L and D. PLLA and PDLA homopolymers are usually prepared from, respectively, optically pure L- and D-lactic acid or lactides. PLLA and PDLA, especially when high molecular weight polymers are targeted, are often obtained starting from lactide and not directly from lactic acid. In 1987, Ikada et al. (Macromolecules 20, 904 (1987)) discovered the stereocomplexation of PLLA and PDLA (sc-PLA). The produced stereocomplex PLA (sc-PLA) has improved properties compared to pure PLLA or pure PDLA, such as an increased melt temperature. For example, the melt temperature of stereocomplex is around 230°C, typically 50°C higher than each of the isolated PLLA and PDLA homopolymers.

Such stereocomplexes may be obtained by mixing PLLA with PDLA in the presence of a solvent, such as dichloromethane (or analogous solvents). This mixture can be subsequently dissolved in an excess of methanol, after which the stereocomplex may precipitate. However, improving stereocomplexity of polymers with a high molecular weight, for example higher than 100 kDa, has proven to be difficult: simple mixing is likely acc17ompanied by homochiral (hc) crystallization of the component polymers with the stereocomplex (sc) crystallization remaining incomplete.

An alternative to stereocomplex-PLA, especially when high molecular weight polymers are concerned, is the production of stereoblock-PLA (sb-PLA). However, sb-PLA is produced through solid-state polycondensation (or post-polycondensation). Reaction times associated with such processes are of the order of several hours, and thus less suitable for industrial scale-up.

Therefore, there remains a need for an industrially up-scalable and efficient process able to produce sc-PLA.

### SUMMARY OF THE INVENTION

It is therefore an object of the present invention to provide a process for preparing a PLLA/PDLA stereocomplex polymer that can be implemented on an industrial scale. Furthermore, it is an object of the present invention to provide a process for preparing a PLLA/PDLA stereocomplex polymer with high molecular weight. Additionally, it is an object of the present invention to provide a process for preparing a PLLA/PDLA stereocomplex polymer with increased purity.

The present inventors have now found that by mixing PLLA and PDLA with a supercritical fluid in an extruder attains one or more of the above objects. The process according to the invention can be performed quickly, efficiently, with limited homochiral polymer coexisting with the stereocomplex, and in the absence of hazardous solvents.

The present invention concerns a process for preparing a PLLA/PDLA stereocomplex polymer, comprising the steps of:
a) polymerizing L,L-lactide to obtain PLLA;
b) polymerizing D,D-lactide to obtain PDLA;
c) mixing the PLLA obtained in step a) with the PDLA obtained in step b) in an extruder, in the presence of a supercritical fluid, thereby preparing a PLLA/PDLA stereocomplex polymer; and
d) optionally, removing the supercritical fluid from the PLLA/PDLA stereocomplex polymer obtained in step c).

The independent and dependent claims set out particular and preferred features of the invention. Features from the dependent claims may be combined with features of the independent or other dependent claims as appropriate.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

### BRIEF DESCRIPTION OF THE FIGURES

Figure 1 schematically represents the extruder set-up used in examples 1-3.
Figure 2 represents an example of an extruder configuration suitable for the invention.
Figure 3 represents a graph plotting the DSC analysis results of examples 1-3.

### DETAILED DESCRIPTION OF THE INVENTION

When describing the invention, the terms used are to be construed in accordance with the following definitions, unless a context dictates otherwise.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

As used in the specification and the appended claims, the singular forms "a", "an," and "the" include plural referents unless the context clearly dictates otherwise. By way of example, "a screw" means one screw or more than one screw.

Unless defined otherwise, all technical and scientific terms used herein have the same meaning as is commonly understood by one of skill in the art. All publications referenced herein are incorporated by reference thereto.

Throughout this application, the term 'about' is used to indicate that a value includes the standard deviation of error for the device or method being employed to determine the value.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

As used herein, the term "alkyl" by itself or as part of another substituent, refers to a straight or branched saturated hydrocarbon group joined by single carbon-carbon bonds having 1 or more carbon atom, for example 1 to 12 carbon atoms, for example 1 to 6 carbon atoms, for example 1 to 4 carbon atoms. When a subscript is used herein following a carbon atom, the subscript refers to the number of carbon atoms that the named group may contain. Thus, for example, C₁₋₁₂alkyl means an alkyl of 1 to 12 carbon atoms. Examples of alkyl groups are methyl, ethyl, propyl, isopropyl, butyl, isobutyl, sec-butyl, *tert*-butyl, pentyl and its chain isomers, hexyl and its chain isomers, heptyl and its chain isomers, octyl and its chain isomers, nonyl and its chain isomers, decyl and its chain isomers, undecyl and its chain isomers, dodecyl and its chain isomers.

As used herein, the term "alkylene", by itself or as part of another substituent, refers to alkyl groups that are divalent, i.e., with two single bonds for attachment to two other groups. Alkylene groups may be linear or branched and may be substituted as indicated herein. Non-limiting examples of alkylene groups include methylene (-CH₂-), ethylene (-CH₂-CH₂-), methylmethylene (-CH(CH₃)-), 1-methyl-ethylene (-CH(CH₃)-CH₂-), n-propylene (-CH₂-CH₂-CH₂-), 2-methylpropylene (-CH₂-CH(CH₃)-CH₂-), 3-methylpropylene (-CH₂-CH₂-CH(CH₃)-), n-butylene (-CH₂-CH₂-CH₂-CH₂-), 2-methylbutylene (-CH₂-CH(CH₃)-CH₂-CH₂-), 4-methylbutylene (-CH₂-CH₂-CH₂-CH(CH₃)-), pentylene and its chain isomers, hexylene and its chain isomers, heptylene and its chain isomers, octylene and its chain isomers, nonylene and its chain isomers, decylene and its chain isomers, undecylene and its chain isomers, dodecylene and its chain isomers.

As used herein, the term "C₆₋₁₀aryl", by itself or as part of another substituent, refers to phenyl, naphthyl, indanyl, or 1,2,3,4-tetrahydro-naphthyl. As used herein, the term "arylene", by itself or as part of another substituent, refers to aryl groups that are divalent, i.e., with two single bonds for attachment to two other groups.

The present invention concerns a process for preparing a PLLA/PDLA stereocomplex polymer, comprising the steps of:
a) polymerizing L,L-lactide to obtain PLLA;
b) polymerizing D,D-lactide to obtain PDLA;
c) mixing the PLLA obtained in step a) with the PDLA obtained in step b) in an extruder, in the presence of a supercritical fluid, thereby preparing a PLLA/PDLA stereocomplex polymer; and
d) optionally, removing the supercritical fluid from the PLLA/PDLA stereocomplex polymer obtained in step c).

In a preferred embodiment, the present invention concerns a process for preparing a PLLA/PDLA stereocomplex polymer, comprising the steps of:
a) polymerizing L,L-lactide to obtain PLLA;
b) polymerizing D,D-lactide to obtain PDLA;
c) mixing the PLLA obtained in step a) with the PDLA obtained in step b) in an extruder, in the presence of a supercritical CO₂, thereby preparing a PLLA/PDLA stereocomplex polymer; and
d) optionally, removing the supercritical CO₂ from the PLLA/PDLA stereocomplex polymer obtained in step c).

The process according to the invention allows the preparation a PLLA/PDLA stereocomplex polymer.

A PLLA/PDLA stereocomplex polymer is based on the combination of two specific types of polylactic acid. As used herein, the terms "polylactic acid" or "polylactide" or "PLA" are used interchangeably and refers to poly (lactic acid) polymers containing repeat units derived from lactic acid. PLA suitable for the present invention can be prepared according to any method known in the state of the art. The PLA can be prepared by ring-opening polymerization of raw materials having required structures selected from lactide, which is a cyclic dimer of lactic acid, glycolide, which is a cyclic dimer of glycolic acid, and caprolactone and the like. Lactide includes L-lactide, which is a cyclic dimer of L-lactic acid, and D-lactide, which is a cyclic dimer of D-lactic acid.

The PLLA (poly-L-lactide) for use in the present invention comprises the product of a polymerization reaction of mainly L-lactides (or L,L-lactides). Other suitable PLLA can be copolymers of PLLA with some D lactic acid units. The term "poly-L-lactide (PLLA)" refers to the isotactic polymer with the general structure (I):

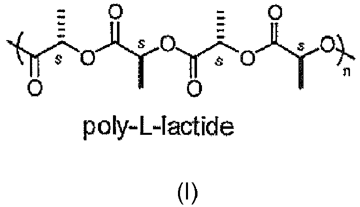

The PDLA (poly-D-lactide) for use in the present invention comprises the product of a polymerization reaction of mainly D-lactides. Other suitable PDLA can be copolymers of PDLA with some L lactic acid units. The term "poly-D-lactide (PDLA)" refers to the enantiomer of PLLA.

Copolymeric components other than lactic acid may be used and include dicarboxylic acid, polyhydric alcohol, hydroxycarboxylic acid, lactone, or the like, which have two or more functional groups each capable of forming an ester bonding. These are, for example, polyester, polyether, polycarbonate, or the like which have the two or more unreacted functional groups in a molecule. The hydroxycarboxylic acids may be selected from the list comprising glycolic acid, hydroxybutyric acid, hydroxyvaleric acid, hydroxypentanoic acid, hydroxycaproic acid, and hydroxyheptanoic acid. In an embodiment no comonomer is used.

Preferably, the PLA has a minimum degree of polymerization of 7, preferably of at least 20, preferably of at least 50, preferably of at least 100, preferably of at least 250, preferably of at least 500, preferably of at least 750, preferably of at least 1000..

Other examples of copolymers include poly-ester-urethanes, as disclosed in US 2010/0113734 A1, which is hereby incorporated by reference in its entirety, or lactide - amino-acid comonomers. In an embodiment, the comonomer is polyesterurethane. Examples of suitable copolymers can be polylactide-urethane copolymers, which are the reaction products that can be obtained by a process comprising the step of contacting:
- a polylactide having terminal hydroxyl groups, produced by contacting at least one lactide monomer with a diol or a diamine of general formula R¹(A)₂ wherein A is -OH or -NH₂ and R¹ is a substituted or an unsubstituted C₁₋₂₀ alkylene or C₆₋₂₀ arylene group in the presence of a catalytic system under polymerization conditions, with
- a diisocyanate compound of general formula O=C=N-R²-N=C=O wherein R² is a substituted or unsubstituted C₁₋₂₀ alkylene or C₆₋₂₀ arylene group, optionally in the presence of a second diol or diamine of general formula R³(A)₂ wherein A is -OH or -NH₂ and R³ is a substituted or an unsubstituted C₁₋₂₀ alkylene or C₆₋₂₀ arylene group in the presence of a catalytic system under polymerization conditions.

Preferably, R¹, R² and R³ are an alkylene or an arylene group containing from 3 to 20 carbon atoms, preferably from 3 to 13 carbon atoms, more preferably from 6 to 13 carbon atoms. The alkylene or the arylene group may be substituted or not. The alkylene group may be linear, cyclic, saturated or unsaturated. Preferably, R¹, R² and R³ are an arylene group. Examples of suitable diamines include 1,4-butanediamine, 1,6-hexanediamine, 1,4-cyclohexanediamine, 1,4-phenyldiamine, 4,4'-diaminodiphenylmethane, preferably 1,4-phenyldiamine or 4,4'-diaminodiphenylmethane. Examples of suitable diols include 1,3-propandiol, 1,3-butanediol, 1,4-butanediol, 1,6-hexanediol, 1,7-heptanediol, 1,8-octanediol, and preferably xylene glycol. For example, the lactide used to obtain a polylactide-urethane copolymer can be a compound formed by the cyclic dimerisation of the lactic acid. The lactide may exist in a variety of isomeric forms such as L, L-lactide, D, D-lactide and D, L-lactide. Preferably, L, L-lactide can be used. Examples of suitable diisocyanates include 1,6-hexamethylene diisocyanate (HMDI), 4,4'-dicyclohexylmethane diisocyanate, 4,4'-methylene diphenylisocyanate (MDI), toluene diisocyanate (TDI), and p-phenylene diisocyanate. Preferably, 4,4'-methylene diphenylisocyanate can be used.

In a preferred embodiment, the PLLA obtained in step a) comprises one or more poly-L-lactide urethane sections and/or wherein the PDLA obtained in step b) comprises one or more poly-D-lactide urethane sections. Preferably, the polylactide and the polylactide-urethane copolymers are produced by reactive extrusion.

Preferably, the PLLA and the PDLA respectively have an optical purity (also called isomeric purity or enantiomeric excess) of the L or D isomer, which is at least 80 wt% of the PLA, preferably at least 92 wt% of the PLA, preferably at least 95 wt%. An optical purity from at least 99 wt% is more preferred. Optical purity may be measured by enzymatic method, NMR or polarimetry.

Preferably, optical purity is measured by enzymatic method and/or NMR, as described for herein below.

Enzymatic method: The stereochemical purity of the PLLA or of the PDLA can be determined from the respective content of L-mer or of D-mer. the terms "content of D-mer" and "content of L-mer" refer respectively to the monomer units of type D and of type L that occur in polylactide, using the enzymatic method.

The principle of the method is as follows: The L-lactate and D-lactate ions are oxidized to pyruvate respectively by the enzymes L-lactate dehydrogenase and D-lactate dehydrogenase using nicotinamide-adenine dinucleotide (NAD) as coenzyme. To force the reaction in the direction of formation of pyruvate, it is necessary to trap this compound by reaction with hydrazine. The increase in optical density at 340 nm is proportional to the amount of L-lactate or of D-lactate present in the sample. The samples of PLA can be prepared by mixing 25 ml of sodium hydroxide (1 mol/L) with 0.6 g of PLA. The solution was boiled for 8h and then cooled. The solution was then adjusted to neutral pH by adding hydrochloric acid (1 mol/L), then deionized water was added in a sufficient amount to give 200 ml. The samples were then analyzed on a Vital Scientific Selectra Junior analyzer using, for L-mer determination of poly-L-lactide acid, the box titled "L-lactic acid 5260" marketed by the company Scil and for D-mer determination of poly-D-lactide acid, the box titled "L-lactic acid 5240" marketed by the company Scil. During the analysis, a reactive blank and calibration using the calibrant "Scil 5460" are used.

The presence of insertion and racemization defects can also be determined by carbon-13 nuclear magnetic resonance (NMR) (Avance, 500 MHz, 10 mm SELX probe). The samples can be prepared from 250 mg of PLA dissolved in 2.5 to 3 ml of CDCl³.

In an embodiment, the PLLA used in the invention comprises a content of D isomer of at most 20 wt%, preferably of at most 10 wt%, preferably of at most 8 wt%, preferably of at most 5 wt%, more preferably of at most 2 wt%, most preferably of at most 1 wt% of the PLLA.

In an embodiment, the PDLA used in the invention comprises a content of L isomer of at most 20 wt%, preferably of at most 10 wt%, preferably of at most 8 wt%, preferably of at most 5 wt%, preferably of at most 2 wt% of the PDLA more preferably of at most 1 wt% of the PDLA.

The process according to the invention is particularly useful for polymers with high molecular weights. Preferably, the PLLA and/or PDLA formed in steps a) and b) have high molecular weights.

In a preferred embodiment, the PLLA obtained in step a) or the PDLA obtained in step b) has a weight average molecular weight (Mw) of at least 40 kDa, preferably at least 100 kDa, preferably at least 150 kDa.

In a preferred embodiment, the PLLA obtained in step a) and the PDLA obtained in step b) have a weight average molecular weight (Mw) of at least 40 kDa, preferably at least 100 kDa, preferably at least 150 kDa. Measurement of the molecular masses may be performed at 25°C using a liquid chromatograph WATERS 610. Firstly, a polymer solution is prepared in chloroform (1 mg polymer/ml). Then, 100 µl of this solution is taken and injected, through a filter (with pores of 0.2 µm diameter, on the chromatograph column at 25°C. Molecular masses are determined from the retention time in the column, translated in mass equivalent using a universal calibration law based on polystyrene standards. For example, ASTM practice D3016-97(2010) may be used.

Preferably, PLLA and PDLA has a number average molecular weight (Mn) ranging from 40.000 to 350.000 g/mol, more preferably from 50.000 to 175.000 g/mol, even more preferably from 60.000 to 150.000 g/mol. The weight average and number average molecular weight were measured by chromatography by gel permeation compared to a standard polystyrene in chloroform at 25°C.

In an embodiment, the ratio of the weight average molecular weight (Mw) to the number average molecular weight Mn is generally between 1.2 and 5.0 for the PLLA and PDLA.

Processes for preparing PLA are well-known by the person skilled in the art. For example it can be obtained by the process describes in documents WO1998/002480, WO 2010/081887, FR2843390, US5053522, US 5053485 or US5117008.

For example, a process for preparing PLLA or PDLA, comprises the step of reacting at least one L-lactide or D-lactide, respectively, optionally in the presence of at least one initiator, in the presence of a catalyst.

The process may be performed with or without solvent.

The catalyst employed by the process may have general formula M(Y¹,Y², ...Y^{p})_{q}, in which M is a metal selected from the group comprising the elements of columns 3 to 12 of the periodic table of the elements, as well as the elements Al, Ga, In, TI, Ge, Sn, Pb, Sb, Ca, Mg and Bi; whereas Y¹, Y², ... Y^{p} are each substituents selected from the group comprising alkyl with 1 to 20 carbon atoms, aryl having from 6 to 30 carbon atoms, alkoxy having from 1 to 20 carbon atoms, aryloxy having from 6 to 30 carbon atoms, and other oxide, carboxylate, and halide groups as well as elements of group 15 and/or 16 of the periodic table; p and q are integers of from 1 to 6. As examples of suitable catalysts, we may notably mention the catalysts of Sn, Ti, Zr, Zn, and Bi; preferably an alkoxide or a carboxylate and more preferably Sn(Oct)₂, Ti(OiPr)₄, Ti(2-ethylhexanoate)₄, Ti(2-ethylhexyloxide)₄, Zr(OiPr)₄, Bi(neodecanoate)₃ or Zn(lactate)₂.

The catalyst may have a general formula (III): 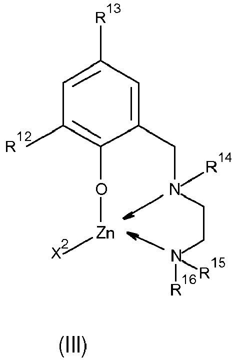 wherein
R¹² and R¹³ are each independently C₁₋₁₀alkyl,
R¹⁴, R¹⁵ and R¹⁶ are each independently C₁₋₁₀alkyl, or
R¹⁴ and R¹⁵ are covalently bound to each other and are each a methylene and
R¹⁶ is C₁₋₁₀alkyl,
X² is selected from C₁₋₁₀alkyl, -OR¹⁷, or -N(SiR¹⁸₃)₂, R¹⁷ is C₁₋₁₀alkyl, and R¹⁸ is C₁₋₆alkyl.
R¹² and R¹³ are each independently C₁₋₁₀alkyl; preferably, R¹² and R¹³ are each independently C₁₋₆alkyl; preferably, R¹² and R¹³ are each independently C₁₋₄alkyl; for example, R¹² and R¹³ can be each independently selected from the group consisting of methyl, ethyl, *n*-propyl, *i*-propyl, 2-methyl-ethyl, *n*-butyl, *i*-butyl and *t*-butyl; preferably, R¹² and R¹³ can be each independently selected from the group consisting of methyl, ethyl, *i*-propyl and *t*-butyl; for example R¹² and R¹³ can be each independently selected from *i*-propyl or *t*-butyl; preferably, R¹² and R¹³ are *t*-butyl,
R¹⁴, R¹⁵ and R¹⁶ are each independently C₁₋₁₀alkyl, preferably, R¹⁴, R¹⁵ and R¹⁶ are each independently C₁₋₆alkyl, preferably R¹⁴, R¹⁵ and R¹⁶ are each independently C₁₋₄alkyl, for example, R¹⁴, R¹⁵ and R¹⁶ can be each independently selected from the group consisting of methyl, ethyl, *n*-propyl, *i*-propyl, 2-methyl-ethyl, *n*-butyl, *i*-butyl and *t*-butyl; for example, R¹⁴, R¹⁵ and R¹⁶ can be each independently selected from the group consisting of methyl, ethyl, *i*-propyl and *t*-butyl; for example, R¹⁴, R¹⁵ and R¹⁶ are each independently selected from methyl or ethyl; preferably, R¹⁴, R¹⁵ and R¹⁶ are each independently methyl, or R¹⁴ and R¹⁵ are covalently bound to each other and are each a methylene and R¹⁶ is C₁₋₁₀alkyl; preferably R¹⁶ is C₁₋₆alkyl; preferably, R¹⁶ is C₁₋₄alkyl; for example R¹⁶ can be selected from the group consisting of methyl, ethyl, *n*-propyl, *i*-propyl, 2-methyl-ethyl, *n*-butyl, *i*-butyl and *t*-butyl; for example R¹⁶ can be selected from the group consisting of methyl, ethyl, *i*-propyl and *t*-butyl; for example R¹⁶ can be selected from methyl or ethyl; for example R¹⁶ can be methyl;
X² is selected from C₁₋₁₀alkyl, -OR¹⁷, or -N(SiR¹⁸₃)₂, R¹⁷ is C₁₋₁₀alkyl, and R¹⁸ is C₁₋₆alkyl; preferably, X² is selected from C₁₋₆alkyl, -OR¹⁷, or -N(SiR¹⁸₃)₂, R¹⁷ is C₁₋₆alkyl, and R¹⁸ is C₁₋₆alkyl; preferably, X² is selected from C₁₋₄alkyl, -OR¹⁷, or -N(SiR¹⁸₃)₂, R¹⁷ is C₁₋₄alkyl, and R¹⁸ is C₁₋₄alkyl; for example X² can be selected from the group consisting of methyl, ethyl, *n*-propyl, *i*-propyl, 2-methyl-ethyl, *n*-butyl, *i*-butyl and *t*-butyl, or -OR¹⁷, or -N(SiR¹⁸₃)₂, R¹⁷ can be selected from the group consisting of methyl, ethyl, *n*-propyl, *i*-propyl, 2-methyl-ethyl, *n*-butyl, *i*-butyl and *t*-butyl, and R¹⁸ can be selected from the group consisting of methyl, ethyl, *n*-propyl, *i*-propyl, 2-methyl-ethyl, *n*-butyl, *i*-butyl and *t*-butyl; preferably, X² can be selected from the group consisting of methyl, ethyl, *i*-propyl and n-butyl, or -OR¹⁷, R¹⁷ can be selected from the group consisting of methyl, ethyl, *i*-propyl and *t*-butyl; preferably, X² can be selected from -OR¹⁷, R¹⁷ can be selected from the group consisting of methyl, ethyl, *i*-propyl and *t*-butyl; preferably, X² can be -OR¹⁷, and R¹⁷ is ethyl.

In an embodiment, said catalyst of Formula (III) is (2,4-di-tert-butyl-6-(((2-(dimethylamino)ethyl)(methyl)amino)methyl)phenoxy)(ethoxy)zinc, also referred to as "DDTBP-Zn (OEt)" represented by Formula (IV). 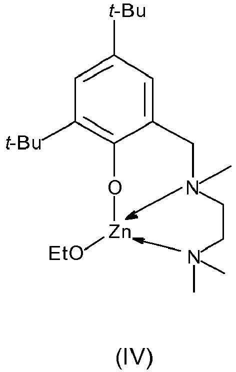 (2,4-di-tert-butyl-6-(((2-(dimethylamino)ethyl)(methyl)amino)methyl)phenoxy)(ethoxy)zinc can be prepared as described in Williams et al. (J. Am. Chem. Soc., 2003, 125, 11350-59) hereby incorporated by reference.

In an embodiment, the PLLA or PDLA is obtained by polymerizing L-lactide, or D-lactide, respectively, preferably in the presence of a compound of formula (V), acting as an initiator and transfer agent of the polymerization,

R¹⁰-OH (V)

wherein R¹⁰ is selected from the group consisting of C₁₋₂₀alkyl, C₆₋₃₀aryl, and C₆₋₃₀arylC₁₋₂₀alkyl optionally substituted by one or more substituents selected from the group consisting of halogen, hydroxyl, and C₁₋₆alkyl. Preferably, R¹⁰ is selected from C₃₋₁₂alkyl, C₆₋₁₀aryl, and C₆₋₁₀arylC₃₋₁₂alkyl, optionally substituted by one or more substituents, each independently selected from the group consisting of halogen, hydroxyl, and C₁₋₆alkyl; preferably, R¹⁰ is selected from C₃₋₁₂alkyl, C₆₋₁₀aryl, and C₆₋₁₀arylC₃₋₁₂alkyl, optionally substituted by one or more substituents, each independently selected from the group consisting of halogen, hydroxyl and C₁₋₄alkyl. The initiator can be an alcohol. The alcohol can be a polyol such as diol, triol or higher functionality polyhydric alcohol. The alcohol may be derived from biomass such as for instance glycerol or propanediol or any other sugar-based alcohol such as for example erythritol. The alcohol can be used alone or in combination with another alcohol.

In an embodiment, non-limiting examples of initiators include 1-octanol, isopropanol, propanediol, trimethylolpropane, 2-butanol, 3-buten-2-ol, 1,3-butanediol, 1,4-butanediol, 1,6-hexanediol, 1,7-heptanediol, benzyl alcohol, 4-bromophenol,1,4-benzenedimethanol, and (4-trifluoromethyl)benzyl alcohol; preferably, said compound of formula (V) is selected from 1-octanol, isopropanol, and 1,4-butanediol.

The polymerization can be performed at a temperature of 60°C - 200°C. The temperature is preferably that of the reaction itself. According to an embodiment, without solvent, the polymerization can be performed at a temperature of 110°C - 190°C in bulk.

In a preferred embodiment, the mixture in step d) has a PLLA/PDLA weight ratio of from 30/70 to 70/30, preferably of from 40/60 to 60/40, preferably of from 45/55 to 55/45, more preferably of about 50/50.

According to the invention, the mixing step c) is performed in the presence of a supercritical fluid. As used herein, the term "supercritical fluid" refers to a fluid at or above its critical temperature and at or above its critical pressure, as exemplified in Table 1.

**Table 1**

| Fluid | *T*_{c}(°C) | *P*_{c}(MPa) |
|---|---|---|
| Carbon dioxide | 31.2 | 7.38 |
| Ammonia | 132.4 | 11.29 |
| Water | 374.1 | 22.1 |
| Ethane | 32.5 | 4.91 |
| Propane | 96.8 | 4.26 |
| Cyclohexane | 279.9 | 4.03 |
| Methanol | 240.0 | 7.95 |
| Ethanol | 243.1 | 6.39 |
| Isopropanol | 235.6 | 5.37 |
| Acetone | 235.0 | 4.76 |

In a preferred embodiment, the supercritical fluid is supercritical CO₂. As used herein, the term "supercritical CO₂" refers to carbon dioxide at or above its critical temperature (31.2 °C) and critical pressure (72.8 atm/7.38 MPa). Other alternatives are ammonia, water, ethane, propane, cyclohexane, methanol, ethanol, isopropanol, acetone, and mixtures thereof.

Preferably, the supercritical liquid, such as supercritical CO₂, is removed, for example by using a vacuum pump. Venting the supercritical fluid has the advantage that impurities, such as undesirable volatiles, may also be vented from the PLA. The supercritical fluid, such as supercritical CO₂, may also be recycled in the system to be reinjected.

In an embodiment, the supercritical fluid is not vented, or only partially vented. The supercritical fluid can be used as a blowing gas to produce a foam. In an embodiment, the process according to the invention prepares a stereocomplex PLA foam.

In a preferred embodiment the supercritical fluid, preferably supercritical CO₂ is present in step c) in a range from 1.0 to 50.0% by weight, preferably from 2.0 to 30.0% by weight, preferably from 3.0 to 20.0% by weight, relative to the total weight of the mixture of PLLA, PDLA and supercritical fluid in the extruder. In an embodiment, the ratio of the flow rate of the mixture in step c), expressed in g/h, versus the flow rate of the supercritical fluid, expressed in ml/min, is at most 1000, preferably at most 500, preferably at most 300, preferably at most 150.

In some embodiments, step c) of the process according to the invention, may be performed at a temperature of at least 180°C, preferably of at least 210°C, preferably of at least 225°C, and preferably of at most 250°C.

An advantage of the process according to the invention, is that the residence time in the extruder can be limited, allowing the process to be efficiently performed on an industrial scale.

In a preferred embodiment, the residence time in the extruder in step c) is at most 120 minutes, more preferably at most 60 minutes, more preferably at most 30 minutes, more preferably at most 10 minutes, more preferably at most 5 minutes.

In a preferred embodiment, the residence time in the extruder in step c) is at most 3 minutes, more preferably at most 1 minute.

As used herein, the term "residence time" refers to the time wherein the mixture in step c) is present in the extruder, or is present in a series of extruders.

The mixing step c) can be performed in the presence of additional polymers. Preferably, the additional polymers are enantiomeric polymers that form a stereocomplex or a hetero-stereocomplex. In an embodiment, the mixture in step c) further comprises poly(D-amino acid) and/or poly(L-amino)acid. In an alternative embodiment, the mixture in step c) does not comprise poly(D-amino acid) and/or poly(L-amino)acid.

In this specification, the supercritical CO₂ is not considered a solvent. As used herein, the term "solvent" refers to a solvent other than supercritical CO₂.

An advantage of the process according to the invention, is that, besides the supercritical fluid, the process does not require the use of a solvent , allowing the process to be safely performed on an industrial scale. For example, the mixture in step c) comprises less than 0.001% by weight of a solvent, preferably the mixture in step c) is essentially free from solvents.

For example, the mixture in step c) is essentially free from solvents selected from the group comprising: chloro-substituted alkanes (such as dichloro methane and trichloro methane), alkyl acetates (such as ethyl-, propyl- and n-butyl acetate), ethers (such as diethyl ether and tetrahydrofuran), alcohols (such as methanol and ethanol), ketones (such as acetone, methyl ethyl ketone and methyl isobutyl ketone), cyclic hydrocarbons (such as hexane) and aromatic hydrocarbons (such as toluene, o-dichlorobenzene and o-, m-, or p-xylene) or acetonitrile.

The present process is an extrusion process. As used herein, the terms "extrusion" or "extrusion process", "pelletization" or "pelletizing" are used herein as synonyms and refer to the process of transforming a polymer resin into a "polymer product" or into "pellets" after pelletizing. The process preferably comprises several equipments connected in series, including one or more rotating screws in an extruder, a die, and means for cutting the extruded filaments into pellets.

Preferably, a mixture of PLLA and PDLA is fed to the extruding apparatus through a valve, preferably a feeding screw or a rotary valve, and conveyed - while passing a flow meter - to the at least one feeding zone of the extrusion apparatus. In an embodiment, nitrogen is provided in the feeding zone to prevent air from entering the extrusion apparatus, to thereby limit polymer degradation.

After being fed into the extruder, the PLLA/PDLA mixture is preferably transported along with the rotating screw of the extruder. The PLLA/PDLA mixture, in the presence of a supercritical fluid, melts and is homogenized and mixed.

The extruder can have one or more heating means e.g. a jacket to heat the extruder barrels or a hot oil unit. The screw in the extruder can be the vehicle upon which the polyolefin product travels. The shape of the screw can determine, along with the speed at which the screw turns, expressed in rpm, the speed at which the product moves and the pressure attained in the extruder. The screw in the screw mixer can be powered by a motor, preferably an electric motor. The extruder is preferably a twin-screw extruder.

In a preferred embodiment, the extruder comprises at least one screw, wherein the at least one screw comprises a reverse conveying element, preferably wherein the at least one screw comprises at least two reverse conveying elements. A twin screw extruder is preferred.

As used herein, the term "reverse conveying element" refers to a section of the screw that has a reverse thread compared to the rest of the screw. A reverse conveying element can create a zone inside the extruder where the pressure is increased. Preferably, the pressure is increased to reach supercritical conditions. In a preferred embodiment, the screw profile comprises kneading blocks, compression zones, right-handed (normal) and left-handed (inverse) screw elements. Such elements are commercially available at Leistritz. The advantage is the creation of "stoppers" inside the screw thanks to the inverse elements. This allows the pressure to increase up to the appropriate value for a supercritical liquid, such as supercritical CO₂.

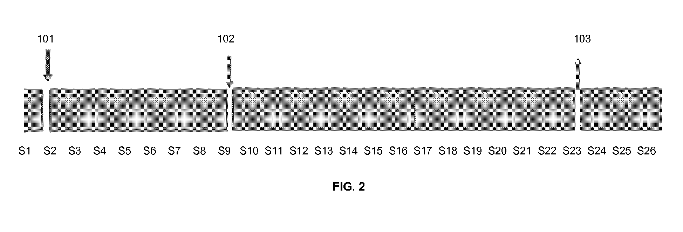

A non limiting example of a suitable extruder is schematically illustrated in Figure 2. The extruder 100 comprises a hopper (not shown) suitable for feeding PLLA and PDLA as shown by arrow 101, and a feed line 102 suitable for introducing supercritical CO₂. The extruder 100 is operably connected to a vacuum pump (not shown) illustrated by arrow 103. The end of the extruder 100 is provided with a die.

In an embodiment, a plurality of extruders is used in series or parallel.

Preferably, the process is a continuous process. As used herein, the term "continuous process" refers to a process by which a continuous entrance and exit of products is possible. As used herein, continuous refers to a process that runs over a significantly longer time than the actual residence time of the compounds in the equipment. For example, the continuous process may run continuously over at least 4 hours, preferably over at least 8 hours, preferably over at least 12 hours, preferably over at least 24 hours.

Optionally, the process according to the invention comprises the step of:

Preferably, the resulting stereocomplex has a high molecular weight. In a preferred embodiment, the PLLA/PDLA stereocomplex polymer has a weight average weight molecular weight of at least 40 kDa, preferably at least 100 kDa, preferably at least 150 kDa.

The quality of the resulting stereocomplex can be tested using DSC analysis. A fusion peak at a temperature higher than the separate enantiomers should be detected. For example, the fusion temperature should be at least 215°C, preferably least 220°C. Preferably, no fusion peak for pure enantiomers can be detected.

The DSC analysis can be performed with a Metler equipment. In a typical DSC experiment, the reported melt temperature and melting enthalpy correspond to the values obtained when heating the sample from room temperature up to 250°C at a rate of 20°C/min. The standard used to calibrate the heating and cooling rate is Indium.

### EXAMPLES

Unless otherwise indicated, all parts and all percentages in the following examples, as well as throughout the specification, are parts by weight or percentages by weight respectively.

PLLA used was Synterra® PLLA 1010. PDLA used was Synterra® PDLA 1010.

The characteristics of the PLLA and PDLA are shown in Table 2.

**Table 2**

| | Mn | Mw | Mz | Polydispersity | Mp | MFI g/10min (2,16 kg 190°C) |
|---|---|---|---|---|---|---|
| PLLA | 76500 | 162000 | 297000 | 2,1 | 133000 | 12 |
| PDLA | 66700 | 135000 | 247000 | 2,0 | 112000 | 12 |

Molecular masses, expressed in Dalton (Mw: Weight-average molecular weight; Mn: Number-average molecular weight; Mz: Z-average molecular weight; Mp: Peak molecular weight; Polydispersity, Pd= Mw/Mn) were determined by SEC (size exclusion chromatography) using polystyrene as reference. More specifically, measurement of the molecular masses was performed at 25°C using a liquid chromatograph WATERS 610. Firstly, a polymer solution was prepared in chloroform (1 mg polymer/ml). Then, 100 µl of this solution was taken and injected, through a filter (with pores of 0.2 µm diameter, on the chromatograph column at 25°C. Molecular masses were determined from the retention time in the column, translated in mass equivalent using a universal calibration law based on polystyrene standards.

The melt flow index (MFI) was measured according to ISO 1133 at 190°C under a load of 2.16 kg.

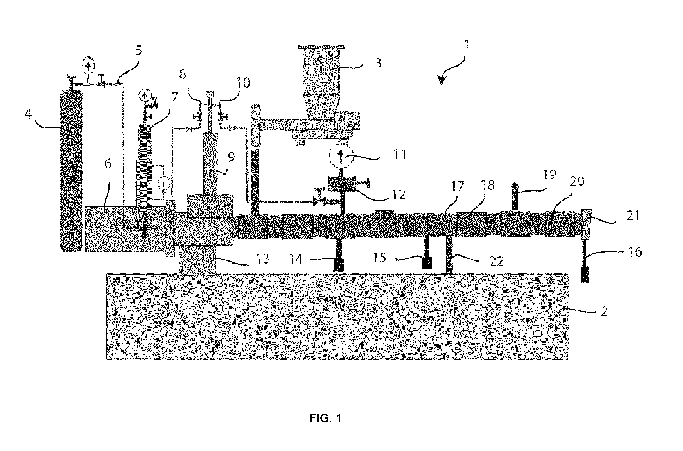

For all examples, the melt extrusion was performed in a co-rotating twin screw extruder (Leistritz ZSE 18HPe), illustrated in Figure 1 with a diameter of 18 mm and a ratio of screw length to diameter (L/D) of 40.

Dried pellets of PLLA and PDLA resins with a 50/50 weight ratio were preliminary dry-mixed and this mix was metered with a gravimetric feeder (Colortronic CS30).

Supercritical CO₂ was fed into the extruder barrel using a metered supercritical CO₂ injection system. The injection system was composed of a liquid CO₂ cylinder with a deep tube, a transfer thermo regulated cylinder, a syringe pump model 260D from ISCO, and a back pressure regulator. The syringe pump was set in order to have a constant flow rate and the back pressure was used for a stable supply of scCO₂.

Reverse screw elements were inserted before and after the scCO₂ injection point to provide a melt sealing. The length of the scCO2 zone was 13.6D.

The extruder set-up is shown in Figure 1, using the following reference numbers:
- 1: extruder
- 2: main frame of the extruder
- 3: hopper
- 4: liquid CO₂ tank
- 5: Liquid CO₂ piping from the main tank to the scCO₂ tank
- 6: motor of the extruder
- 7: super critical CO₂ tank
- 8: scCO₂ piping from the scCO₂ tank to syringe pump
- 9: syringe pump
- 10: scCO₂ piping from the syringe pump to the extruder
- 11: pressure gauge
- 12: back pressure regulator
- 13: frame
- 14: pressure transducer
- 15: pressure transducer
- 16: pressure transducer
- 17: connector of the barrel's element
- 18: barrel's element
- 19: vent
- 20: barrel's element
- 21: die

The screw speed was 80 rpm for all examples. The sections in the screw had the following temperatures:
Z1=180°C
Z2=185°C
Z3=200°C
Z4=190°C
Z5=200°C
Z6=195°C
Z7=200°C
DIE=230°C

Reverse screw elements were inserted in zone Z2 and zone Z5, before and after the CO₂ injection point (located in zone Z3). These elements create two polymer stoppers delimiting the zone of CO₂ supercritical conditions. To remove the gas (zone Z6), a vacuum pump is installed between the second stopper and the die. The extruder comprised following screw elements, as illustrated in Figure 2:

| | |
|---|---|
| GFA-2-15-30A | (S1) |
| GFA-2-15-15 | (S4, S5) |
| GFA-2-15-15L | (S6, S7, 17, 18) |
| GFA-2-20-15 | (S19) |
| GFA-2-20-30 | (S3, S22) |
| GFA-2-20-60 | (S8, S24) |
| GFA-2-30-30 | (S13, S16) |
| GFA-2-30-60 | (S8, S23) |
| GFF-2-30-90 | (S2) |
| GFM-2-15-15 | (S9, S26) |
| GFM-2-15-30 | (S9, S25) |
| KB4-2-15-30° | (S10) |
| KB4-2-15-60°F | (S11, S12, S15, S21) |
| KB4-2-15-90° | (S20) |
| KB5-2-30-90° | (S14) |

In these screw elements, the following code was used:
GFA (= co-rotating, conveying, free meshing) - # of threads - pitch - length
GFF (= co-rotating, conveying, freely cut) - # of threads - pitch - length
GFF (= co-rotating, conveying, mixing) - # of threads - pitch - length
KB (= kneading block) # kneading segments - # of threads - length of kneading block - twisting angle of the individual kneading segments

The suffix "L" stands for a reverse screw element.

Venting of the supercritical CO₂ from the polymer was allowed in all examples.

### Comparative example 1 and examples 2-3

The conditions for comparative example 1 (without supercritical CO₂ insertion into the extruder) and for examples 2-3 (with supercritical CO₂ insertion into the extruder) are shown in Table 3:

**Table 3**

| **example** | **flow rate (g/h)** | **T melt (°C)** | **p melt (bar)** | **torque (%)** | **sc CO₂ flow rate (ml/min)** | **sc CO₂ flow rate (wt %)^{(*)}** | **sc CO₂ inj p (bar)** | **Venting** |
|---|---|---|---|---|---|---|---|---|
| **1** | 1500 | 230 | 12 | 67 | 0 | 0 | 0 | yes |
| **2** | 1490 | 230 | 13 | 74 | 5 | 8.9 | 76 | yes |
| **3** | 1490 | 230 | 8 | 45 | 20 | 28.2 | 78.5 | yes |

| | | | | | | | | |
|---|---|---|---|---|---|---|---|---|
| (*) The scCO₂ volumetric mass was 0.487 g/ml (data from Air liquid). | | | | | | | | |

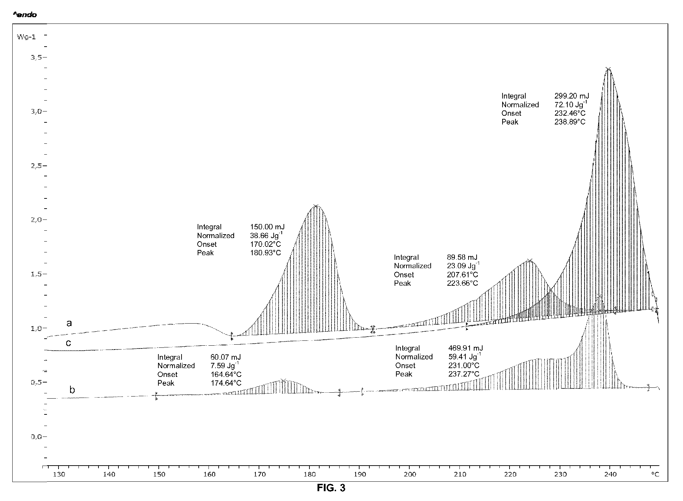

DSC analysis results are shown in Figure 3 (a-c). The DSC analysis was performed with a Metler equipment. The reported melt temperature and melting enthalpy correspond to the values obtained when heating the sample from room temperature up to 250°C at a rate of 20°C/min. The standard used to calibrate the heating and cooling rate was Indium. In example 1 (Figure 3a), the shear was optimized to produce the highest possible proportion of stereocomplex PLA (shown by a proportion of polymer melting above 200°C). However, no supercritical CO₂ was injected into the extruder, and as a result a significant proportion of polymer melting around 170 - 180°C was produced (Figure 3a). This proportion can be attributed to a large concentration of homochiral PLA (hc PLA).

When 5 ml/min supercritical CO₂ was introduced in the extruder (example 2, Figure 3b), the proportion of polymer melting above 200°C was clearly higher than in the comparative example 1. This proportion of polymer melting above 200°C can be attributed to an increased proportion of stereocomplex PLA.

When an even higher flow rate of 20 ml/min of supercritical CO₂ was introduced in the extruder (example 3, Figure 3c), only polymer melting above 200°C was observed in the DSC analysis, indicating that only stereocomplex PLA was formed.

## Claims

1. A process for preparing a PLLA/PDLA stereocomplex polymer, comprising the steps of:
a) polymerizing L,L-lactide to obtain PLLA;
b) polymerizing D,D-lactide to obtain PDLA;
c) mixing the PLLA obtained in step a) with the PDLA obtained in step b) in an extruder, in the presence of a supercritical fluid, thereby preparing a PLLA/PDLA stereocomplex polymer; and
d) optionally, removing the supercritical fluid from the PLLA/PDLA stereocomplex polymer obtained in step c).

2. The process according to claim 1, wherein the supercritical fluid is supercritical CO₂.

3. The process according to claim 1 or 2, wherein the residence time in the extruder in step c) is at most 120 minutes.

4. The process according to claim 3, wherein the residence time in the extruder in step c) is at most 3 minutes.

5. The process according to any of claims 1 to 4, wherein the mixture in step c) comprises at most 0.001% by weight of a solvent, preferably wherein the mixture in step c) is essentially free from solvents.

6. The process according to any of claims 1 to 5, wherein the extruder comprises at least one screw, wherein the at least one screw comprises a reverse conveying element, preferably wherein the at least one screw comprises at least two reverse conveying elements.

7. The process according to any of claims 1 to 6, wherein the PLLA obtained in step a) comprises a content of D isomer of at most 20 wt%, preferably of at most 10 wt%, preferably of at most 8 wt%, preferably of at most 5 wt%, more preferably of at most 1 wt% of the PLLA, with percentage by weight based on the total weight of PLLA obtained in step a).

8. The process according to any of claims 1 to 7, wherein the PDLA obtained in step b) comprises a content of L isomer of at most 20 wt%, preferably of at most 10 wt%, preferably of at most 8 wt%, preferably of at most 5 wt%, more preferably of at most 1 wt% of the PDLA, with percentage by weight based on the total weight of PDLA obtained in step b).

9. The process according to any of claims 1 to 8, wherein the PLLA obtained in step a) or the PDLA obtained in step b) has a weight average molecular weight (Mw) of at least 40 kDa, preferably at least 100 kDa, preferably at least 150 kDa.

10. The process according to claim 9, wherein the PLLA obtained in step a) and the PDLA obtained in step b) have a weight average molecular weight (Mw) of at least 40 kDa, preferably at least 100 kDa, preferably at least 150 kDa.

11. The process according to any of claims 1 to 10, wherein the mixture in step d) has a PLLA/PDLA weight ratio of from 30/70 to 70/30, preferably of from 40/60 to 60/40, preferably of from 45/55 to 55/45, more preferably of about 50/50.

12. The process according to any of claims 1 to 11, wherein the PLLA obtained in step a) comprises one or more poly-L-lactide urethane sections and/or wherein the PDLA obtained in step b) comprises one or more poly-D-lactide urethane sections.

13. The process according to any of claims 1 to 12, wherein the supercritical fluid, preferably supercritical CO₂, is present in step c) in a range from 1.0 to 50.0% by weight, preferably from 2.0 to 30.0% by weight, preferably from 3.0 to 20.0% by weight, relative to the total weight of the mixture of PLLA, PDLA and supercritical fluid in the extruder.

14. The process according to any of claims 1 to 13, wherein the optical purity of the PLA is at least 80 wt%, preferably at least 92 wt%, preferably at least 95 wt%, preferably at least 99 wt%.
